Europäisches Patentamt

European Patent Office

Office européen des brevets

(19)

(11) **EP 0 792 782 A2**

(12) **EUROPÄISCHE PATENTANMELDUNG**

(43) Veröffentlichungstag:
03.09.1997 Patentblatt 1997/36

(51) Int. Cl.[6]: **B60T 8/00**

(21) Anmeldenummer: 96120527.5

(22) Anmeldetag: 19.12.1996

(84) Benannte Vertragsstaaten:
DE FR GB IT

(30) Priorität: 27.02.1996 DE 19607185

(71) Anmelder:
Bayerische Motoren Werke Aktiengesellschaft
80788 München (DE)

(72) Erfinder: Meier, Kurt
85716 Unterschleissheim (DE)

(54) **Verfahren zur Sicherstellung eines neutralen Fahrverhaltens bei Kurvenfahrten und gleichzeitigem Lastwechsel**

(57)      Die Erfindung betrifft ein Verfahren zur Sicherstellung eines neutralen Fahrverhaltens bei Kurvenfahrten und gleichzeitigem Lastwechsel durch den Betrieb eines Fahrzeugsystems mit zumindest einer angetriebenen Achse, einem Achsausgleichsgetriebe, Radbremsen zum selektiven Abbremsen eines einzelnen Rades, einer Einrichtung zur Erkennung von Kurvenfahrten und einer Einrichtung zur Erkennung eines Schubbetriebes und Erzeugung eines der Stärke des Schubbetriebes entsprechenden Signals.

Problematisch bei hinter- bzw. vorderradangetriebenen Fahrzeugen ist das Fahrverhalten bei Kurvenfahrten im Schubbetrieb. Je nach Antriebsart wird dadurch ein Über- bzw. Untersteuern des Fahrzeugs verursacht. Aufgabe der Erfindung ist die Bereitstellung eines Verfahrens zur Vermeidung dieser Problematik.

Diese Aufgabe wird dadurch gelöst, daß ein Rad der angetriebenen Achse bei einer Kurvenfahrt zumindest in Abhängigkeit vom Schubbetriebsignal so gebremst wird, daß das dadurch erzeugte Moment (Gegengiermoment) das durch die Kurvenfahrt bei Schubbetrieb hervorgerufene Giermoment kompensiert.

Fig. 2

EP 0 792 782 A2

**Beschreibung**

Die Erfindung betrifft ein Verfahren zur Sicherstellung eines neutralen Fahrverhaltens bei Kurvenfahrten und gleichzeitigem Lastwechsel gemäß dem Oberbegriff des Anspruchs 1.

Es ist bekannt, zur Stabilisierung des Fahrverhaltens von Kraftfahrzeugen mechanische Sperrdifferentiale einzusetzen. Dabei wird beispielsweise die Traktion im Zugbetrieb auf Fahrbahnen mit niedrigem Reibwert optimiert als auch eine deutliche Verbesserung des Lastwechselverhaltens speziell bei Kurvenfahrten erreicht. Allerdings ist von Nachteil bei mechanischen Sperrdifferentialen, daß ein Grundsperrmoment und der lastabhängige Anteil der Sperrwirkung konstruktiv fest vorgegeben sind. Wird durch ein hohes Motorschleppmoment die Kraftschlußbeanspruchung an der angetriebenen bzw. geschleppten Achse überschritten, so wirkt sich die mechanische Sperre negativ aus. Im übrigen kann bei mechanischen Sperrdifferentialen ein Anti-Blockier-Betrieb nicht mehr in der gewünschten Weise erfolgen.

Bekannt ist der Einsatz von elektronisch-hydraulischen Antriebsschlupf-Regelsystemen. Herkömmlicherweise wird dadurch ein geregelter Bremseingriff im Anfahrstadium vorgenommen, so daß eine Sperrdifferentialwirkung erzeugt werden kann.

Die Realisierung von Differentialsperren durch elektrisch- bzw. elektro-hydraulischen Bremseingriff ist u. a. in der DE 33 30 236 C2 sowie in der DE 41 32 470 A1 beschrieben.

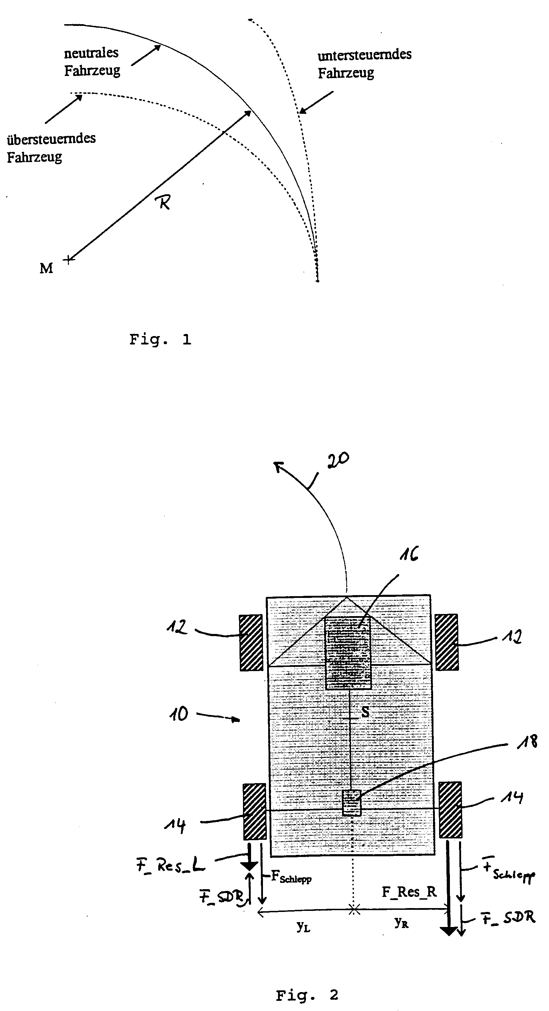

Allerdings kann mit den gerade genannten Systemen kein neutrales Fahrverhalten bei Kurvenfahrten und gleichzeitigem Lastwechsel - insbesondere im Schubbetrieb - durchgeführt werden. Bei diesen Fahrbedingungen tritt der Effekt auf, daß durch die Motorbremswirkung eine Bremsung der angetriebenen Räder erfolgt. Dies resultiert in einem mehr oder minder großen negativen Schlupf der Antriebsräder. Je nach Antriebsart (heck- oder frontangetrieben) und der entsprechenden Schubkraft neigt das Fahrzeug aus diesem Grunde zum Über- bzw. Untersteuern. Dies ist in Fig. 1 schematisch dargestellt. Um einen Mittelpunkt M mit Radius R bewegt sich der Schwerpunkt eines Fahrzeugs mit einem neutralen Kurvenfahrverhalten auf der durchgezogenen Linie, die mit der Bezeichnung „neutrales Fahrzeug" gekennzeichnet ist. Heckangetriebene Fahrzeuge neigen zum Übersteuern, so daß sich der Kurvenradius verringert. Dies ist in Fig. 1 durch die gestrichelte Linie, gekennzeichnet mit „übersteuerndes Fahrzeug", dargestellt. In entsprechender Weise tritt bei einem frontangetriebenen Fahrzeug das Problem des Untersteuerns auf, so daß sich gegenüber dem neutralen Fahrzeug ein größerer Kurvenradius ergibt, was in Fig. 1 durch die Linie, gekennzeichnet durch „untersteuerndes Fahrzeug", dargestellt ist.

Aufgabe der Erfindung ist es, ein Verfahren anzugeben, welches ein neutrales Fahrverhalten bei Kurvenfahrten und gleichzeitigem Lastwechsel sicherstellt.

Diese Aufgabe ist durch die im Anspruch 1 angegebenen Merkmale gelöst.

Erfindungswesentlich ist, daß zur Verbesserung des Lastwechselverhaltens bei Kurvenfahrten an der geschleppten Achse durch einen geregelten Bremseingriff ein Gegengiermoment erzeugt wird, das dem durch den Schubbetrieb hervorgerufenen Giermoment entgegenwirkt. Durch eine optimale Kompensation des bei Kurvenfahrten und gleichzeitigem Schubbetrieb entstehenden Giermomentes wird ein neutrales Fahrzeugverhalten erreicht. Der Bediener kann somit problemlos die Kurve durchfahren, ohne daß er mit einem Über- oder Untersteuern des Fahrzeugs rechnen muß.

Durch die Kräfteentwicklung bei heck- und/oder frontangetriebenen Fahrzeugen wird je nach Unter- oder Übersteuerungs-Tendenz das kurvenäußere oder kurveninnere Hinter- bzw. Vorderrad gebremst. Durch die Bremsung des entsprechenden Rades wird die bereits vorhandene, durch die Motorbremsung hervorgerufene Schleppkraft zu einer resultierenden Kraft erhöht. Im Gegensatz dazu wird durch die Wirkung des Achsausgleichsgetriebes am anderen Rad der Achse die Schleppkraft in entsprechender Weise vermindert. Durch die daraus resultierenden Bremswirkungsunterschiede wird insgesamt ein Moment erzeugt, dessen Richtung gerade entgegengesetzt zu dem durch die Kurvenfahrt und den Schubbetrieb hervorgerufenen Giermoment ist. Eine vollständige Kompensation findet dann statt, wenn die Größe des Gegengiermoments genau der Größe des Giermoments entspricht.

Zur Durchführung des erfindungsgemäßen Verfahrens muß zum einen eine Kurvenfahrt des Fahrzeuges und zum anderen die Richtung der Kurvenfahrt erkannt werden. Dies kann beispielsweise durch die Ermittlung der Differenzgeschwindigkeit der Räder an der nichtangetriebenen Achse und/oder des Lenkwinkels und/oder der Querbeschleunigung erkannt werden.

Um eine optimale Kompensation des Giermoments zu erhalten, sollte auch das Ausmaß des Schubbetriebes ermittelt werden. Dies kann beispielsweise durch einen Vergleich des vom Fahrer gewünschten Drehmoments mit dem Reibmoment des Motors oder aber mit dem Vergleich der Drosselklappenvorgabe des Fahrers mit der Nullmomentkennlinie der Drosselklappe im Motormomenten-Kennfeld geschlossen werden. Ist die vom Motor verursachte Schubkraft bekannt, so kann auf das dadurch hervorgerufene Giermoment geschlossen werden.

Ein unterschiedliches Verhalten des Fahrzeugs ergibt sich auf Fahrbahnen mit unterschiedlichem Reibwert. Aus diesem Grunde ist es von großem Vorteil, wenn bei der Berechnung des Bremsdruckes für die Bremse eines einzelnen Rades, welcher für ein bestimmtes Gegengiermoment erzeugt werden muß, auch der Fahrbahnreibwert miteinfließt. Die Ermittlung des Fahrbahnreibwertes ist beispielsweise aus den unterschiedlichen Radgeschwindigkeiten und der Fahrzeugbeschleunigung möglich.

Da bei der Bestimmung der Schleppkräfte bzw. der Momente auch das Übersetzungsverhältnis des Getriebes eine Rolle spielt, ist es von Vorteil, bei der Bestimmung des Bremsdruckes die eingelegte Gangstufe mitzuberücksichtigen.

Eine vorteilhatte Ausführungsform des Verfahrens ist dadurch gekennzeichnet, daß die Bremsbetätigung zur Erzeugung des Gegengiermoments erst ab bestimmten Schleppkräften bzw. Radschlupfwerten erfolgt. Zu diesem Zweck wird eine festgelegte Größe ermittelt, beispielsweise eine dem Motorschleppmoment oder dem Radschlupf entsprechende Größe, und das erfindungsgemäße Verfahren erst dann durchgeführt, wenn diese Größe einen ersten Grenzwert überschreitet. Da das Unter- oder Übersteuerverhalten gerade von den Fahrbahnreibwerten abhängen kann, ist es von Vorteil, diesen ersten Regelungsgrenzwert als Funktion des Fahrbahnreibwertes zu bestimmen. Vorzugsweise ist der Regelungsgrenzwert nach Art einer Hysterese ausgebildet, so daß die Bremsbetätigung bei Überschreiten einer ersten Hysteresekurve einsetzt und bei Unterschreiten einer zweiten Hysteresekurve beendet wird. Dadurch wird ein Schwingen im Regelkreis verhindert. Die Differenz der beiden Hysteresekennlinien kann beispielsweise um die 0,25 km/h gewählt werden.

Eine besonders vorteilhafte Ausführungsform des Verfahrens ist dadurch gekennzeichnet, daß der erste Regelungsgrenzwert durch eine Abweichung der Geschwindigkeit des zu bremsenden Rades von der tatsächlichen Fahrzeuggeschwindigkeit festgelegt wird. Alternativ kann auch der Radschlupf des zu bremsenden Rades berücksichtigt werden. Diese Ausführungsformen des Verfahrens sind besonders einfach zu realisieren, da die Radgeschwindigkeiten durch üblicherweise am Fahrzeug vorhandene Raddrehzahlsensoren ohne weiteren Aufwand zu ermitteln sind.

Problematisch kann sein, daß durch die zusätzliche Bremsung eines Antriebsrades die Gefahr des Abreissens der Seitenführung dieses Rades besteht. Dies ist insbesondere bei hinterradangetriebenen Fahrzeugen der Fall, wenn das kurvenäußere Hinterrad abgebremst wird. Ist die Bremskraft zu groß, so erreicht die aus der Schleppkraft und der zusätzlichen Bremskraft resultierende Gesamtkraft ein solches Maß, daß der Verlust der Seitenführung des Fahrzeuges droht. Dies ist zu verhindern. Daher sollte das erfindungsgemäße Verfahren zur Sicherstellung einer ständigen Seitenführung beendet werden. Dies wird beispielsweise dadurch erreicht, daß das erfindungsgemäße Verfahren bei Überschreitung eines zweiten Regelungsgrenzwert abgebrochen wird. Dieser zweite Regelungsgrenzwert liegt weiter als der erste Regelungsgrenzwert von der tatsächlichen Geschwindigkeit des Fahrzeugs entfernt.

Vorzugsweise wird das erfindungsgemäße Verfahren erst beendet, wenn der zweite Regelungsgrenzwert über eine bestimmte Zeitdauer überschritten wird. Von Vorteil ist auch, wenn zur Berechnung dieser Zeitdauer die Fahrbahnreibung miteinbezogen wird.

Wird das erfindungsgemäße Verfahren durchgeführt, so ergibt sich durch die zusätzliche Bremsung eines angetriebenen Rades insgesamt eine negative Fahrzeugbeschleunigung, die höher als die vom Bediener durch Rücknahme des Gaspedals gewünschte Abbremsung ist. Diese zusätzliche Bremswirkung kann durch eine entsprechende Erhöhung des Motordrehmoments kompensiert werden. Da in einigen Fahrzeugen bereits eine Motor-Schleppmoment-Regelung vorhanden ist, kann diese Regelung zum Ausgleich der zusätzlichen negativen Beschleunigung verwendet werden. Die Erhöhung des Motordrehmoments ist abhängig vom zusätzlichen Bremsdruck und fahrzeugspezifischen Daten. Aus diesen Parametern kann die Erhöhung des Motordrehmoments daher auch berechnet werden.

Eine ausschlaggebende Größe für das Gegengiermoment bzw. die Erhöhung des Motordrehmomentes ist der für die zusätzliche Bremsung verwendete Bremsdruck, welcher in jedem Fahrzustand bestimmbar sein muß. Eine Bestimmungsmöglichkeit ergibt sich durch die Addition von Druckauf- und die Subtraktion von Druckabbaupulsen bei bekanntem P-V-Diagramm.

Das erfindungsgemäße Verfahren soll im übrigen nicht beim normalen Bremsen oder beim Anti-Blockier-Betrieb der Bremsen des Fahrzeugs eingesetzt werden, so daß bei einem entsprechenden Signal das erfindungsgemäße Verfahren nicht durchgeführt bzw. beendet werden sollte.

Bei einer vorteilhaften Ausführungsform wird das erfindungsgemäße Verfahren auch nicht bei Geschwindigkeiten kleiner einer bestimmten absoluten Grenzgeschwindigkeit beispielsweise 20 km/h durchgeführt. Dies führt zu einer größeren Fahrzeugsicherheit sowie zur Vermeidung eines Nachschiebens.

Die Erfindung wird nachfolgend, auch hinsichtlich weiterer Vorteile und Merkmale, mit Bezug auf die beiliegenden Zeichnungen erläutert. In den Zeichnungen zeigen

Fig. 1    eine schematische Darstellung eines Über- bzw. Untersteuerverhaltens bei heck- oder frontangetriebenen Fahrzeugen

Fig. 2    eine vereinfachte Darstellung von Kräften, die bei Durchführung des erfindungsgemäßen Verfahrens wirken,

Fig. 3    ein Diagramm, welches die Auswirkung der Durchführung des erfindungsgemäßen Verfahrens an den beiden angetriebenen Rädern bezüglich der Geschwindigkeit zeigt,

Fig. 4    ein Diagramm, welches eine Ausführungsform des erfindungsgemäßen Verfahrens an den beiden angetriebenen Rädern hinsichtlich des Radschlupfes darstellt und

Fig. 5    ein Diagramm, welches die Beendigung des erfindungsgemäßen Verfahrens bei drohendem Verlust der Seitenführungskraft des Hinterrades darstellt.

Im folgenden sollen Ausführungsbeispiele des erfindungsgemäßen Verfahrens anhand eines heckangetriebenen Fahrzeuges dargestellt werden. Natürlich kann das Verfahren auch bei front- bzw. bei vierradangetriebenen Fahrzeugen durchgeführt werden.

Ein heckangetriebenes Fahrzeug verhält sich bei Kurvenfahrten und gleichzeitigem Schubbetrieb wie in Fig. 1 durch die mit „Übersteuerndes Fahrzeug" bezeichnete, gestrichelte Kurve dargestellt. Dieses Verhalten wird durch die vom Motor im Schubbetrieb verursachten Schlepp-Kräfte hervorgerufen und soll zur Verdeutlichung anhand von Fig. 2 näher erläutert werden. In Fig. 2 ist in schematisch stark vereinfachter Weise ein Fahrzeug 10 mit zwei Vorderrädern 12 und zwei Hinterrädern 14 dargestellt. Die Vorderräder 12 sind nicht angetrieben, die Hinterräder 14 angetrieben. Der Antrieb erfolgt durch ein Motorgetriebesystem 16, von dem die Kraft über eine Welle an ein Ausgleichsgetriebe 18 und von dort auf die Hinterräder 14 übertragen wird. Durch Rücknahme eines Gaspedals erfolgt ein Schubbetrieb, der sich dadurch kennzeichnen läßt, daß die vom Motor erzeugte Bremskraft entsprechend dem Gesamtwirkungsgrad des Antriebsstrangs $\eta_{ges}$ und der Gesamtübersetzung $i_{ges}$ auf die hinteren Räder übertragen wird. Im Normalfall wird an den beiden Hinterrädern dadurch eine Schleppkraft $F_{Schlepp}$ hervorgerufen, die an beiden Hinterrädern 14 gleich groß ist. Durch den unterschiedlichen Abstand der Radaufstandspunkte der beiden Hinterräder 14 vom Fahrzeugschwerpunkt S resultiert ein Drehmoment MD_Norm um den Schwerpunkt S, das sich in erster Näherung beschreiben läßt durch die Differenz der Schleppkraft $F_{SchleppR}$ des rechten Hinterrades 14 multipliziert mit dem Abstand $y_R$ vom Schwerpunkt $S_R$ einerseits und der Schleppkraft $F_{SchleppL}$ und dem Abstand $y_L$ des linken Hinterrades 14 vom Schwerpunkt $S_L$ andererseits:

$$MD\_Norm = F_{SchleppR} \cdot y_R - F_{SchleppL} \cdot y_L \qquad (1)$$

Dieses bei Kurvenfahrten und gleichzeitigem Schubbetrieb entstehende Moment MD_Norm führt im vorliegenden Beispiel zu einem Übersteuern des Fahrzeugs.

Eine solche Übersteuerung kann dadurch verhindert werden, daß die an den Hinterrädern 14 angreifenden Kräfte $F_{ResR}$, $F_{ResL}$ derart verändert werden, daß das daraus resultierende Moment MD_Res zu Null wird. Dies kann mathematisch ausgedrückt werden durch die Formel:

$$MD\_Res = F_{ResR} \cdot y_R - F_{ResL} \cdot y_L \; (= 0) \qquad (2)$$

Zur Erreichung eines solchen resultierenden „Nullmomentes" wird die Bremskraft am rechten Hinterrad (vgl. Fig. 2) erhöht. Über das Achsausgleichsgetriebe 18 wird dadurch die Schleppkraft am linken Hinterrad 14 erniedrigt. Diese Maßnahme muß bei einer durch den Pfeil 20 dargestellten Kurvenfahrt vorgenommen werden. Erfolgt die Kurvenfahrt in die andere Richtung, so muß die zusätzliche Bremsung eines angetriebenen Rades genau entsprechend entgegengesetzt erfolgen.

Durch Betätigung der dem rechten Hinterrad 14 zugeordneten Radbremse kann der zugeordneten Schleppkraft $F_{Schlepp}$ eine weitere Kraft hinzugefügt werden. Die Erhöhung bzw. Verminderung der Schleppkraft $F_{Schlepp}$ am rechten bzw. linken Hinterrad 14 kann durch entsprechende Bremsbetätigung kontinuierlich variiert werden.

Im vorliegenden Fall - nämlich bei der Linkskurve gemäß Fig. 2 - ergeben sich für das rechte und das linke Hinterrad 14 folgende resultierende Kräfte $F_{ResR}$ und $F_{ResL}$:

$$F_{ResR} = F_{Schlepp} + F_{SDR} \qquad (3)$$

$$F_{ResL} = F_{Schlepp} - F_{SDR} \cdot \eta_{HAG} \qquad (4)$$

wobei $\eta_{HAG}$ den Wirkungsgrad des Hinterradgetriebes und $F_{SDR}$ die zusätzliche Bremskraft am rechten Hinterrad darstellt.

Die am in Fig. 2 rechten Hinterrad 14 aufgebrachte zusätzliche Kraft $F_{SDR}$ ist so genannt, weil eine Wirkung wie bei einem Sperrdifferential (SDR) erreicht wird.

Als Voraussetzung zur optimalen Durchführung des vorgeschlagenen Verfahrens muß das Fahrzeug zumindest über folgende Fähigkeiten verfügen: Es muß eine Kurvenfahrt erkennen können und auch die Richtung der Kurve. Ferner muß eine Erkennung des Schubbetriebes und auch die Bestimmung der Größe der Schubkraft möglich sein. Im vorliegenden Fall sind auch noch Module zur Unterscheidung von Fahrbahnen mit hohem oder niedrigem Reibwert zur Ermittlung der eingelegten Gangstufe zur Motorschleppmomentregelung und zur Berechnung der Radzylinderdrücke vorgesehen. Ferner ermitteln an jedem Rad angeordnete Radsensoren die jeweilige Radgeschwindigkeit.

Die Erkennung der Kurvenfahrt wird über die Berechnung der Differenzgeschwindigkeit beider Räder an der nichtangetriebenen Achse vorgenommen. Die Richtung der Kurve erfolgt über das Vorzeichen.

Eine Unterscheidung der Fahrbahn in bezug auf hohe oder niedrige Reibwerte kann über die Höhe des Geschwindigkeitsunterschieds von Rädern und aus der Fahrzeugbeschleunigung abgeleitet werden. Die Ableitung kann aus der Referenzgeschwindigkeit oder direkt mittels eines Längs- und Querbeschleunigungssensors ermittelt werden.

Der Schubbetrieb wird dadurch festgestellt, daß das vom Fahrer gewünschte Moment kleiner ist als das im Fahrzeug gespeicherte Reibmoment des Motors. Dies kann beispielsweise dadurch erfolgen, daß die Drosselklappenvorgabe des Fahrers, also die Gaspedalstellung, kleiner ist als eine Stellung, in der der Motor kein Moment abgibt oder aufnimmt (Nullmomentkennlinie). Letztere Stellung ist einem Motormomenten-Kennfeld zu entnehmen, mit dem die Nullmoment-Kennlinien im Fahrzeug abgespeichert sind.

Die Gesamtübersetzung $i_{ges}$ ist aus dem Verhältnis von Motordrehzahl und Raddrehzahl der angetriebenen Achse zu entnehmen.

Das am Rad anliegende Drehmoment MD_Rad kann bei symmetrischer Verteilung durch folgende mathematische Formel dargestellt werden:

$$MD\_Rad = 0,5 \cdot MD\_Motor \cdot i_{ges} \cdot \eta_{Ges} \tag{5},$$

wobei MD_Motor das Moment am Motor, $i_{ges}$ die Gesamtübersetzung und $\eta_{Ges}$ der Gesamtwirkungsgrad des Antriebsstranges ist.

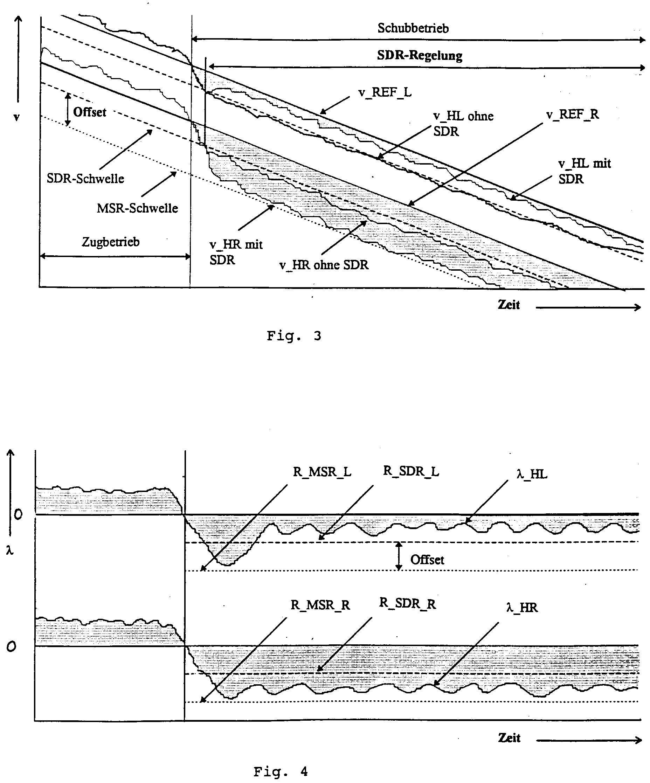

Eine erste Ausführungsform des Verfahrens, nämlich eine Regelungsmöglichkeit für den aufzubringenden Bremsdruck, soll nachfolgend anhand der Fig. 3 und 4 erläutert werden.

In der Fig. 3 ist ein Zeit-Geschwindigkeitsdiagramm (Zeit-v-Diagramm) dargestellt, in dem die obere Gruppe von Kurven dem linken, die untere Gruppe von Kurven dem rechten Hinterrad zugeordnet ist. Vereinfacht ausgedrückt könnte man sich vorstellen, daß ein Fahrzeug im Diagramm von Fig. 3 von links oben nach rechts unten gefahren ist. Zu jedem Hinterrad 14 ist die Referenzgeschwindigkeit mit durchgezogener, gerader Linie eingezeichnet, nämlich v_Ref_L und v_Ref_R.

Im ersten Viertel des Diagramms ist das Fahrzeug im Zugbetrieb. Dadurch liegen die Geschwindigkeiten beider Räder, nämlich v_HR und v_HL, jeweils geringfügig über den Referenzgeschwindigkeiten v_Ref_R bzw. v_Ref_L.

Jeweils gestrichelt unterhalb der Referenzgeschwindigkeitskurve ist eine Gerade eingetragen, die mit „SDR-Schwelle" bezeichnet ist. Ferner ist nur zu der unteren Gruppe von Kurven punktiert eine Gerade eingezeichnet, die mit „MSR-Schwelle" bezeichnet ist. Die Funktion dieser Geraden wird später deutlich.

Wird nun von Zugbetrieb auf den Schubbetrieb übergegangen, so sinken die Geschwindigkeiten beider Hinterräder v_HL und v_HR unterhalb die jeweilige Referenzgeschwindigkeit v_Ref_L und v_Ref_R.

Erst wenn jedoch die tatsächliche Geschwindigkeit des zu bremsenden Hinterrades die „SDR-Schwelle" unterschreitet, wird mit dem Regelbetrieb begonnen. Dies ist beim Beispiel in Fig. 3 in dem Bereich der Fall, der mit „SDR-Regelung" benannt ist.

Im vorliegenden Fall wird wie in Fig. 2 dargestellt eine Linkskurve gefahren. Aus diesem Grund muß beim heckangetriebenen, übersteuernden Fahrzeug das rechte Hinterrad 14 gebremst werden. Bei Einsetzen der SDR-Regelung ist zu erkennen, daß durch die Bremsung des rechten Hinterrades die Geschwindigkeit des rechten Hinterrades „V_HR mit SDR" weiter abnimmt. Insbesondere ist dies aus dem Unterschied „v_HR ohne SDR" und „v_HR mit SDR" deutlich zu erkennen.

In gleichem Maße wie an dem rechten Hinterrad die Geschwindigkeit abnimmt, wird durch die entsprechend verringerte Schleppkraft am linken Hinterrad die Geschwindigkeit des Hinterrades „v_HL mit SDR" erhöht. Dies ist insbesondere aus dem Unterschied von „v_HL mit SDR" und „v_HL ohne SDR" zu erkennen.

Die zusätzliche Bremsung des rechten Hinterrades wird nun in dem Maße geregelt, daß die Geschwindigkeit des linken Hinterrades gerade über der SDR-Schwelle zu liegen kommt (siehe insbesondere Fig. 3, obere Gruppe von Kurven).

Das in Fig. 4 dargestellte Diagramm entspricht der Regelung der Fig. 3, wobei auf der Ordinate bezüglich beider Hinterräder der Schlupf $\lambda$ aufgetragen ist. Die obere Gruppe von Kurven zeigt im ersten Viertel des Diagramms wiederum den Zugbetrieb. Dabei ist mit R_MSR_L die Regelschwelle für die linke Fahrzeugseite bezüglich einer Motorschlupfregelung, mit R_SDR_L die Regelschwelle für die linke Fahrzeugseite bezüglich der SDR-Regelung und mit $\lambda$_HL der Schlupf am linken Hinterrad dargestellt. Entsprechendes gilt bezüglich der rechten Fahrzeugseite für die untere Kurve hinsichtlich der Angaben R_MSR_R, R_SDR_R und $\lambda$_HR.

Wie auch bereits anhand Fig. 3 erläutert, wird bei Unterschreiten der SDR-Regelschwelle am rechten Hinterrad eine Bremsbetätigung so durchgeführt, daß der Schlupf am linken Hinterrad $\lambda$_HL die SDR-Regelschwelle am linken Hinterrad R_SDR_L nicht unterschreitet.

Wird eine Kurve in die andere Richtung gefahren, müssen die Diagrammkurven bezüglich der rechten und linken Fahrzeugseite gerade vertauscht werden, da dann der Bremseingriff am linken Hinterrad erfolgt.

In den beiden beschriebenen Diagrammen wurde die Regelschwelle für den SDR-Betrieb jeweils als Offset von einer Regelschwelle für die Motorschlupfregelung bestimmt.

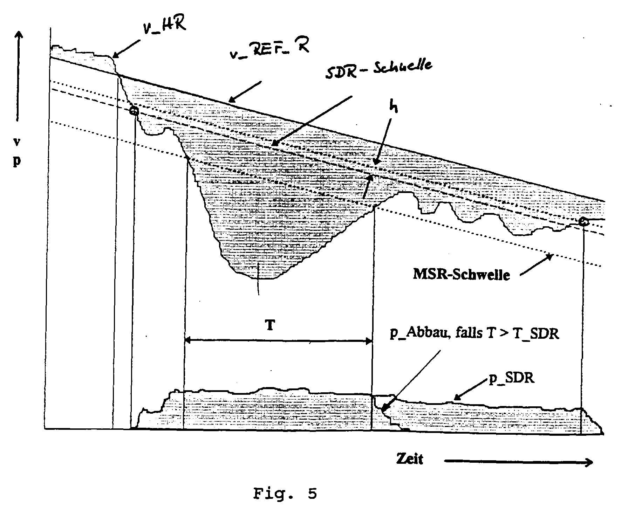

Die Funktion der Motorschlupfregelung-Schwelle bei diesem Verfahren ist insbesondere aus Fig. 5 zu erkennen. In Fig. 5 ist im oberen Bereich des Diagramms wiederum ein Zeit-Geschwindigkeits-Diagramm für das rechte Hinterrad angegeben. Dabei ist nunmehr die „SDR-Schwelle" als Hysterese mit einem Abstand h ausgebildet, so daß eine Schwingung im SDR-Regelkreis verhindert werden kann. Bei Unterschreiten der unteren Hysteresekurve wird die Regelung durchgeführt, und bei Überschreiten der oberen Hysterese die Regelung beendet.

Wird durch die Betätigung der Bremse am - im vorliegenden Fall - rechten Hinterrad 14 die Gesamtbremskraft $F_{ResR}$ zu stark erhöht, so nimmt die betreffende Radgeschwindigkeit in einem Maße ab, daß die Seitenführung durch das kurvenäußere Rad nicht mehr gewährleistet werden kann. Dies ist dann der Fall, wenn - wie in Fig. 5 dargestellt - die Geschwindigkeitskurve die MSR-Schwelle unterschreitet.

Bei Unterschreiten der MSR-Schwelle über eine bestimmte Zeitdauer T von beispielsweise 600 msek wird die SDR-Regelung abgebrochen. Dies ist in Fig. 5 dadurch dargestellt, daß im unteren Bereich des Diagramms eine Druck-Zeit-Darstellung angegeben ist, in der durch die Kurve p_Abbau der Abbau des Bremsdruckes gekennzeichnet ist.

Ist, wie in Fig. 5 gezeigt, noch innerhalb der Zeit T die resultierende Kraft am rechten Hinterrad $F_{ResR}$ wieder oberhalb der MSR-Regelschwelle, so wird die SDR-Regelung weiter durchgeführt (vgl. Kurve p_SDR).

Gemäß einer Alternative kann die Zeitdauer, für welche die Geschwindigkeit des zu bremsenden Rades die MSR-Schwelle unterschreiten darf, variabel nach dem Fahrbahnreibwert vorgegeben werden.

Bei einer normalen Beendigung der SDR-Regelung, nämlich bei Überschreiten der SDR-Schwelle bzw. der oberen Hysterese-Kurve der SDR-Schwelle wird kontinuierlich ein Druckabbau zur Beendigung der SDR-Regelung eingeleitet. Als Unterschied h der beiden Hysterese-Kurven wird ein Wert von z. B. 0,25 km/h vorgeschlagen.

Da der Offset zwischen SDR-Schwelle und MSR-Schwelle eine Funktion des Fahrbahnreibwertes sein kann, besteht die Möglichkeit, bei niedrigen Reibwerten eine SDR-Regelung zu unterbinden, jedoch bei mittleren und hohen Reibwerten die Regelung adaptiv zu gestalten. So kann bei niederen Reibwerten der Offset beispielsweise bei 0 km/h (d. h. SDR-Schwelle = MSR-Schwelle) oder -∞km/h, was einem Verbot der SDR gleichkäme, angesetzt werden. Bei hohen Reibwerten kann der Offset bei 1 km/h angesetzt werden.

Ein weiterer Vorteil der beschriebenen Ausführungsform liegt darin, daß gegenüber der Verwendung von mechanischen Sperrdifferentialen eine von dem Bremsdruck der zu betätigenden Bremse abhängige Sperrdifferentialwirkung gewählt werden kann, und dies kontinuierlich. Die Sperrdifferentialwirkung kann beispielsweise abhängig vom Fahrbahnreibwert ($\mu_F$) bestimmt werden. Im vorliegenden Fall kann bei niedrigen Reibwerten ($\mu_F = 0{,}1$) eine Sperre von 5 %, bei mittleren Reibwerten ($\mu_F = 0{,}4$) eine Sperre von 20 % und bei hohen Reibwerten ($\mu_F = 0{,}8$) eine Sperre von 40 % gewählt werden. Aber auch andere Einstellwerte sind möglich.

Alternativ zu dem oben genannten Regelungsverfahren ist auch eine Steuerung möglich. Das an einem Hinterrad anliegende und vom Motorschleppmoment hervorgerufene Moment ist bekannt bzw. zu bestimmen. Daher kann das zu erzeugende Gegengiermoment MD_SDR in erster Näherung folgendermaßen berechnet werden:

$$MD\_SDR = 0{,}5 \cdot K2 - MD\_Reib \cdot \eta_{Ges} \cdot i_{ges} \tag{6}$$

wobei K2 eine Funktion vom Reibwert f ($\mu_F$), beispielsweise $K2 = 0{,}5 \cdot \mu_F$ ist, MD_Reib das Motorreibmoment darstellt und $\eta_{Ges}$ bzw. $i_{ges}$ die Gesamtübersetzung bzw. der Gesamtwirkungsgrad des Antriebsstranges ist.

Auf der anderen Seite kann das durch einen zusätzlichen Bremsdruck zum Aufbau des Sperrdifferentials p_SDR erzeugte Moment MD_SDR in erster Näherung folgendermaßen ausgedrückt werden:

$$MD\_SDR = 2 \cdot A\_Kolben \cdot p\_SDR \cdot \mu\_Brems \cdot r\_w, \tag{7}$$

wobei

A_Kolben den Kolbendurchmesser des Bremssattels,
p_SDR den Bremsdruck zum Aufbau des Drehmoments durch SDR,
$\mu$_Brems den Reibwert zwischen Bremsbelag und Bremsscheibe und
r_w den wirksamen Reibradius der Bremsscheibe für eine 2-Kolben- bzw. 1-Kolben-Schwimmsattelscheibenbremsanlage beschreibt.

Dabei kann der Bremsdruck p_SDR aus einem Druckmodell bestimmt werden. Alle anderen Parameter in Gleichung (7) sind fahrzeugspezifisch und daher fest.

Durch Gleichsetzung der Gleichungen (6) und (7) kann man den einzuspeisenden Radbremsdruck p_SDR wie folgt bestimmen:

$$p\_SDR = (0{,}5 \cdot K2 \cdot MD\_Reib \cdot \eta_{Ges} \cdot i_{ges})/(2 \cdot A\_Kolben \cdot \mu\_Brems \cdot r\_w) \tag{8}$$

Die einzig zu bestimmenden Parameter in Gleichung (8) sind der Reibwert $\mu_F$ in K2 sowie das Motorreibmoment MD_Reib. Sind diese beiden Größen bekannt, so kann der Radzylinderdruck auf die oben angegebene Weise berechnet werden, da alle anderen Größen fahrzeugspezifische Konstanten sind.

Die Radzylinderdrücke können durch Addieren der Druckauf- und Subtrahieren der Druckabbaupulse beim bekannten P-V-Diagramm der Bremse berechnet werden, so daß entsprechend der berechneten Radzylinderdrücke und der geforderten Bremsanforderung eine Einspeisung bzw. ein Ablassen des Druckmittels aus der zu beaufschlagenden Bremse erfolgen kann.

Eine entsprechend feinfühlige Druckbereitstellung im relevanten Druckbereich (0 bis 40 bar) kann durch eine optimierte Taktung des bereits im Fahrzeug vorhandenen Pumpenmotors erfolgen. Eine entsprechende Taktung ist in der DE 44 08 879 A1 beschrieben, auf die ausdrücklich hingewiesen wird.

Bei heckangetriebenen Fahrzeugen ist für eine schnelle Druckbereitstellung bei den heute üblichen Bremsauslegungen meist kein Zusatzspeicher erforderlich.

Im vorgenannten Beispiel ist das erfindungsgemäße Verfahren anhand eines heckangetriebenen Fahrzeugs erläutert worden. Natürlich kann das Verfahren auch bei einem frontangetriebenen Fahrzeug durchgeführt werden. Dafür muß dann das kurveninnere Rad gebremst werden. Entsprechend verändern sich die zugehörigen Diagramme.

Durch die Bremsung des kurveninneren Vorderrades bei untersteuerdem Frontantrieb wird das kurvenäußere Vorderrad beschleunigt und daher in den Bereich eines geringeren Schlupfes gebracht. Damit wird auch die Seitenführung verbessert, so daß ein Abbruch der SDR-Regelung bei Unterschreiten der MSR-Regelschwelle durch das kurveninnere Rad nicht zwingend erforderlich ist.

Die Volumenaufnahme der vorderen Bremsanlage und die Förderleistung der Pumpe müßte bei herkömmlichen Fahrzeugen genauer untersucht werden, um eine Aussage über den Verbau eines Zusatzspeichers für schnellen Druckaufbau treffen zu können.

Durch das beschriebene, erfindungsgemäße Verfahren, ist eine einfache und kostengünstige Möglichkeit zur Sicherstellung eines neutralen Fahrverhaltens bei Kurvenfahrten und gleichzeitigem Lastwechsel angegeben. Die Sperrwirkung ist im Schubbetrieb nahezu kontinuierlich zwischen 0 und 100 % variabel einstellbar. Die Sperrwirkung kann ferner auf unterschiedliche Fahrbahnreibwerte adaptiv eingestellt werden. Im übrigen kann auf eine mechanische Differentialsperre verzichtet werden, was zu einem entsprechend hohen Kostenvorteil führt. Auch ist in einer Vielzahl von heutigen Fahrzeugen keine zusätzliche Hardware nötig. Die Verwirklichung des Verfahrens könnte durch einfache Einfügung eines Softwaremoduls in bereits bestehende Steuerungen verwirklicht werden. Bei einer softwaremäßigen Verwirklichung können auch Sonderfälle berücksichtigt werden, in denen ein Verbot des Ausbaus der Sperrwirkung besteht.

## Patentansprüche

1. Verfahren zur Sicherstellung eines neutralen Fahrverhaltens bei Kurvenfahrten und gleichzeitigem Lastwechsel durch den Betrieb eines Fahrzeugsystems mit

   - zumindest einer angetriebenen Achse,
   - einem der angetriebenen Achse zugeordneten Achsausgleichsgetriebe,
   - Radbremsen zum selektiven Abbremsen eines einzelnen Rades,
   - einer Einrichtung zur Erkennung von Kurvenfahrten und
   - einer Einrichtung zur Erkennung eines Schubbetriebes und Erzeugung eines der Stärke des Schubbetriebes entsprechenden Signals, dadurch gekennzeichnet, daß ein Rad der angetriebenen Achse bei einer Kurvenfahrt zumindest in Abhängigkeit vom Schubbetriebsignal derart gebremst wird, daß das dadurch erzeugte Moment (Gegengiermoment) das durch die Kurvenfahrt beim Schubbetrieb hervorgerufene Giermoment kompensiert.

2. Verfahren nach Anspruch 1, dadurch gekennzeichnet, daß bei heckangetriebenen Fahrzeugen bei Übersteuer-Tendenz das kurvenäußere und bei Untersteuer-Tendenz das kurveninnere Hinterrad und/oder bei frontangetriebenen Fahrzeugen bei Untersteuer-Tendenz das kurveninnere und bei Übersteuer-Tendenz das kurvenäußere Vorderrad gebremst wird.

3. Verfahren nach Anspruch 1 oder 2, dadurch gekennzeichnet, daß zur Erkennung der Kurvenfahrt die Differenzgeschwindigkeit der Räder an der nichtangetriebenen Achse ermittelt und/oder der Lenkwinkel und/oder die Querbeschleunigung erfaßt wird.

4. Verfahren nach einem der Ansprüche 1 bis 3, dadurch gekennzeichnet, daß auf das Maß des Schubbetriebes durch den Vergleich des vom Fahrer gewünschten Drehmoments mit dem Reibmoment des Motors einerseits oder der Drosselklappenvorgabe des Fahrers mit der Nullmomentkennlinie im Motormomenten-Kennfeld andererseits geschlossen wird.

5. Verfahren nach einem der Ansprüche 1 bis 4,
dadurch gekennzeichnet, daß der Fahrbahnreibwert ermittelt und bei der Berechnung eines das Gegengiermoment bestimmenden Bremsdruckes beim zu bremsenden Rad berücksichtigt wird.

6. Verfahren nach Anspruch 5,
dadurch gekennzeichnet, daß der Fahrbahnreibwert aus unterschiedlichen Radgeschwindigkeiten und der Fahrzeugbeschleunigung ermittelt wird.

7. Verfahren nach einem der vorhergehenden Ansprüche,
dadurch gekennzeichnet, daß die eingelegte Gangstufe bei der Bestimmung des Bremsdruckes berücksichtigt wird.

8. Verfahren nach einem der vorhergehenden Ansprüche,
dadurch gekennzeichnet, daß eine Bremsbetätigung zur Erzeugung des Gegengiermoments erfolgt, wenn ein bestimmter Fahrzeugbetriebszustand, insbesondere eine Radgeschwindigkeitsdifferenz oder ein Schlupf eines angetriebenen Rades, einen ersten Regelungsgrenzwert überschreitet.

9. Verfahren nach Anspruch 8,
dadurch gekennzeichnet, daß der erste Regelungsgrenzwert als Funktion des Fahrbahnreibwertes bestimmt wird.

10. Verfahren nach Anspruch 8 oder 9,
dadurch gekennzeichnet, daß der erste Regelungsgrenzwert nach Art einer Hysterese ausgebildet ist und die Bremsbetätigung bei Überschreiten einer ersten Hysteresekurve einsetzt und bei Unterschreiten einer zweiten Hysteresekurve beendet wird.

11. Verfahren nach einem der Ansprüche 8 bis 10,
dadurch gekennzeichnet, daß der erste Regelungsgrenzwert oder dessen beiden Hysteresekurven durch eine vorbestimmte Abweichung einer Geschwindigkeit des Rades einer angetriebenen Achse von der tatsächlichen Fahrzeuggeschwindigkeit einerseits oder eines Radschlupfes eines Antriebesrades andererseits festgelegt wird.

12. Verfahren nach einem der vorhergehenden Ansprüche,
dadurch gekennzeichnet, daß die Bremsbetätigung zur Erzeugung des Gegengiermoments abgebrochen wird, wenn die Bodenhaftung des die Seitenführung übernehmenden Rades abzureißen droht.

13. Verfahren nach Anspruch 12,
dadurch gekennzeichnet, daß die Bremsbetätigung beendet wird, wenn bei heckangetriebenen Fahrzeugen die Abweichung der Radgeschwindigkeit des kurvenäußeren Hinterrades von der tatsächlichen Fahrzeuggeschwindigkeit oder der Radschlupf einen zweiten Regelungsgrenzwert überschreiten.

14. Verfahren nach Anspruch 13,
dadurch gekennzeichnet, daß der erste Regelungsgrenzwert oder die beiden Hysteresekurven durch einen Offset vom zweiten Regelungsgrenzwert bestimmt werden.

15. Verfahren nach Anspruch 13 oder 14,
dadurch gekennzeichnet, daß die Bremsbetätigung beendet wird, wenn der zweite Regelungsgrenzwert über eine bestimmte Zeitdauer überschritten wird.

16. Verfahren nach Anspruch 15,
dadurch gekennzeichnet, daß die Zeitdauer als Funktion von der Fahrbahnreibung bestimmt wird.

17. Verfahren nach einem der vorhergehenden Ansprüche,
dadurch gekennzeichnet, daß die durch den Bremseingriff zur Erzeugung des Gegengiermoments zusätzlich hervorgerufene negative Beschleunigung durch eine entsprechende Erhöhung des Motordrehmomentes kompensiert wird.

18. Verfahren nach Anspruch 17,
dadurch gekennzeichnet, daß die Erhöhung des Motordrehmomentes unter Berücksichtigung des Bremsdruckes zur Erzeugung des Gegengiermomentes und fahrzeugspezifischen Daten bestimmt wird.

**19.** Verfahren nach einem der vorhergehenden Ansprüche,
dadurch gekennzeichnet, daß der das Gegengiermoment bestimmende Radzylinderbremsdruck über Addition von Druckauf- und Subtraktion von Druckabbaupulsen bei bekanntem P-V-Diagramm bestimmt wird.

**20.** Verfahren nach einem der vorhergehenden Ansprüche,
dadurch gekennzeichnet, daß der Bremseingriff zur Erzeugung des Gegengiermomentes bei normaler Bremsbetätigung abgebrochen wird.

**21.** Verfahren nach einem der vorhergehenden Ansprüche,
dadurch gekennzeichnet, daß der Bremseingriff zur Erzeugung des Gegengiermomentes bei einem Anti-Blockier-Betrieb des Fahrzeugs abgebrochen wird.

**22.** Verfahren nach einem der vorhergehenden Ansprüche,
dadurch gekennzeichnet, daß unterhalb einer vorgegebenen Absolutgeschwindigkeit des Fahrzeugs keine Bremsbetätigung zur Erzeugung des Gegengiermoments erfolgt.

neutrales
Fahrzeug

untersteuerndes
Fahrzeug

übersteuerndes
Fahrzeug

$R$

M

Fig. 1

20

16

12

12

10

S

18

14

14

F_Res_L

$F_{Schlepp}$

$\overline{F}_{Schlepp}$

F_SDR

F_Res_R

F_SDR

$y_L$

$y_R$

Fig. 2

EP 0 792 782 A2

Fig. 3

Fig. 4

11

Fig. 5